# EUROPEAN PATENT SPECIFICATION

(11) **EP 2 279 852 B1**
(45) Date of publication and mention of the grant of the patent: **23.11.2016**
(21) Application number: 09166862.4
(22) Date of filing: 30.07.2009
(51) Int. Cl.: B29C 70/88, F01D 5/28, F01D 25/00, H01B 1/24, B29L 31/00

(54) **Gas turbine engine and method including composite structures with embedded integral electrically conductive paths**
Gasturbinenmotor und Verfahren, das Verbundstrukturen mit eingebetteten integralen elektrisch leitenden Spuren beinhaltet
Moteur à turbine à gaz et procédé incluant des structures composites avec des chemins conducteurs électriques intégraux incorporés

(43) Date of publication of application: 02.02.2011
(73) Proprietor: Rolls-Royce Corporation, Indianapolis, IN 46241 (US)
(72) Inventor: Rice, Eduard Claude, Indianapolis, IN 46234 (US)
(74) Representative: Schaumburg und Partner Patentanwälte mbB

(56) References cited:
- EP-A1- 1 826 402
- EP-A1- 2 065 681

## Description

### FIELD OF THE INVENTION

The present invention is directed generally to gas turbine engines, and more particularly to gas turbine engines including composite structures having embedded electrically conductive paths.

### BACKGROUND OF THE INVENTION

Current state of the art consists of wiring harnesses routed outside a gas turbine engine. Routing of these harnesses can be time consuming and difficult. Harnesses can also be snagged on adjacent features surrounding a gas turbine engine or by mechanics working on the engine. Vibration can also wear through protective coverings surrounding the wire bundle.

There is a continuing need for technology development relating to gas turbine engine construction, assembly and method. The present invention satisfies this need in a novel and nonobvious way.

EP 2 065 681 A1 relates to a sensing system for a gas turbine engine comprising a material having a matrix structure in which a plurality of sensing elements are embedded. The sensing elements are arranged to alter properties such as the dielectric or magnetic properties of the matrix material, and particles that can be used for this purpose include single wall carbon nanotubes, according to the preamble of claim 1. The sensing elements are electrically isolated in the matrix material and influence an RF signal which is received by an RF receiver such that a change in a property of the matrix material can be determined from the returned RF signal.

EP 1 826 402 A1 relates to a lightning protection system of wind turbine blades. At the surface, electrically conductive paths are formed by means of conductive resin. This conductive resin can include nanotubes of carbon fiber.

### SUMMARY OF THE INVENTION

In a first aspect of the present invention, a gas turbine engine comprises a structure having movable portions and static portions. At least a portion of the structure includes a composite material having an electrically conductive path formed from carbon nanotubes configured for conducting electrical signals therealong.

Preferably, the composite material includes a plurality of electrically conductive paths, and further includes a nano switch coupled to the electrically conductive paths so as to be configured for selectively electrically coupling the electrically conductive paths to an external component. A connector is preferably located on a surface of the composite material and coupled to an end of the electrically conductive path for electrically coupling the electrically conductive path to an external component.

In a further aspect of the present invention, a composite structure comprises a composite material. A portion of the composite material includes fibers and a resin impregnated with a predetermined volume percentage of carbon nanotubes substantially surrounding the fibers to form electrically conductive paths therealong. Another portion of the composite material includes fibers and a resin unfilled with carbon nanotubes substantially surrounding the fibers to form electrically non-conductive paths therealong.

### BRIEF DESCRIPTION OF THE DRAWINGS

FIG. 1 is a cross-sectional view of a gas turbine engine incorporating composite structures with embedded electrical paths in accordance with the present invention.
FIG. 2 is a schematic perspective view of a plurality of composite fibers wherein some of the composite fibers have thermally and electrically insulating properties, and some of the composite fibers have thermally and electrically conductive properties in accordance with the present invention.
FIG. 3 is a schematic perspective view of the plurality of composite fibers processed into a sheet material.
FIG. 4 is a schematic exploded perspective view of a plurality of composite fiber sheets.
FIG. 5 is a schematic perspective view of the plurality of composite fiber sheets layed up on one another to form a combined structure.
FIG. 6 is a perspective view of an engine case with multiple electrically conductive paths formed from the electrically conductive composite fibers.
FIG. 7 is a schematic perspective view of an electrically conductive pin bonded to a surface of the combined structure of composite fibers and making contact with a conductive path located within the structure.

### DETAILED DESCRIPTION OF THE PREFERRED EMBODIMENTS

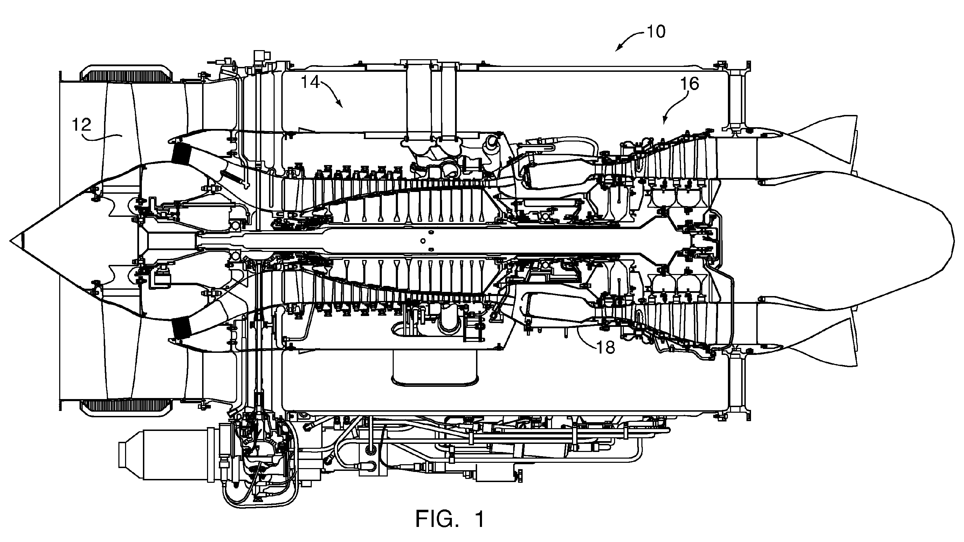

FIG. 1 is a cross-sectional view of a gas turbine engine 10 illustrating, by way of example only, a context for implementing composite structures with embedded integral electrically conductive paths in accordance with the present invention. The gas turbine engine 10 includes, among other things, a fan rotor 12, compressor section 14, turbine section 16 and an engine casing 18. Although composite structures with embedded integral electrically conductive paths will be explained in the context of a gas turbine engine, it should be understood that such composite structures can be implemented in other applications where wiring harnesses are typically used.

Gas turbine engines typically include a plurality of wiring harnesses (not shown) for enabling communication among sensors and other electronic circuitry associated with the gas turbine engine.

The present invention is directed to structures such as, for example, composite airframes and gas turbine engines, which eliminate or reduce the number of external wiring harnesses used with the structure by embedding electrical paths formed with nanotubes in composite airframes and various gas turbine static structures such as engine cases, struts and the like. The electrical paths can also be embedded in movable portions of a gas turbine engine such as the turbine blades. More specifically, the structure is fabricated from a composite material such as, for example, a carbon fiber resin matrix (composite fiber) or fibers from other materials such as glass or boron. The structure is processed using a machine similar to, but not limited to, a fiber placement machine. This resin can be added to fibers to form a prepreg fiber and wound onto a spool using a conventional fabrication technique. Many pre-wound rolls of prepreg fibers are placed into a fiber placement machine for the fabrication of composite structures.

Carbon fiber/resin matrices are not typically electrically conductive; however, when a small percentage of carbon nanotubes (CNT) are added to a resin, the matrix becomes electrically conductive. In accordance with the present invention, as prepreg fibers are positioned around a mandrel to form a structural support, CNT impregnated fibers can be positioned within the structure to provide electrical paths that are embedded within the structure. Electrical connectors can be positioned on the structure surface to mate with external connectors being integral to electrical components, cable harnesses, or any feature that carries electricity or electrical signals. Multiple electrical paths can be positioned within the structure with "nano-switches" positioned at either or both ends of the conductive path. In the event of a severed path, a diagnostic element could sense loss of signal and transfer to another path that is still functional.

When the structure is a gas turbine engine, sensors can be placed within the structure to sense stress/strain levels, temperatures, or any other parameter that can be used to diagnose engine problems or monitor engine health.

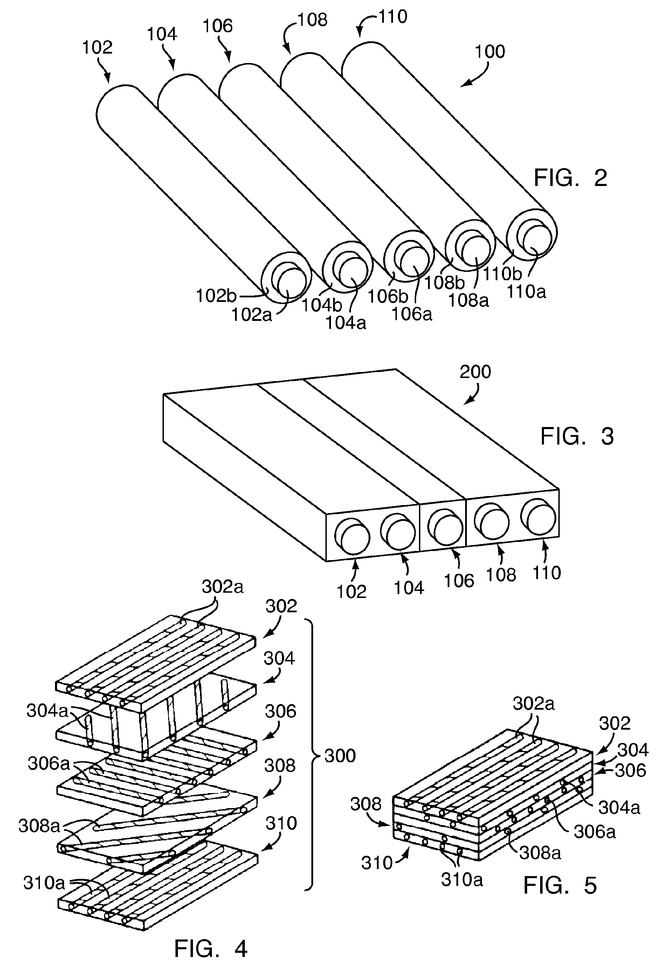

FIG. 2 illustrates a composite material 100 including a plurality of composite fibers 102, 104, 106, 108 and 110 in accordance with the present invention. A portion of the composite material 100 includes fibers such as, for example, the central composite fiber 106 having thermal and electrical conductive properties. Another portion of the composite material 100 includes, for example, the lateral composite fibers 102, 104, 108 and 110, having thermal and electrical insulating properties. More specifically, a portion of the composite material 100 includes a fiber 106a and a layer of resin 106b impregnated with a predetermined volume percentage of carbon nanotubes substantially surrounding the fiber to form the composite fiber 106 having thermal and electrical conductive properties. As an example, the fiber is IM7 fiber, and the resin is a CYCOM 5250-4 resin. Preferably, the percentage of nanotube fill is between about 2% to 3% by weight.

Another portion of the composite material 100 includes fibers 102a, 104a, 108a and 110a. Layers of resin 102b, 104b, 108b and 110b are unfilled with carbon nanotubes and respectively substantially surround the fibers 102a, 104a, 108a and 110a to form the composite fibers 102, 104, 108 and 110. The lack of carbon nanotubes means that the composite fibers 102, 104, 108 and 110 have thermal and electrical insulating properties which prevent electrical signals from being conducted therealong. Thus, the composite fiber 106 including carbon nanotubes is configured to serve as an electrical signal path that can replace a conventional wiring harness.

As shown in FIG. 3, the individual composite fibers 102, 104, 106, 108 and 110 can be processed to form a single sheet 200 of composite material in order to minimize the number of composite material components. Moreover, individual sheets each carrying a plurality of composite fibers can be processed to form a single composite structure. As shown in FIGS. 4 and 5, for example, sheets 302, 304, 306, 308 and 310 can be layed up to form a single composite structure 300. Each of the sheets carries a plurality of electrically conductive and electrically non-conductive composite fibers similar to the composite fibers shown in FIGS. 2 and 3.

As shown in FIGS. 4 and 5, each sheet can carry composite fibers extending in a different direction relative to that of composite fibers carried by an adjacent sheet. Thus, the composite structure 300 can form electrical paths extending in a plurality of directions in order to send electrical signals to various locations within a gas turbine engine or other structure. As can be seen in FIG. 4, composite fibers 304a of the sheet 304 extend in a diagonal direction relative to that of composite fibers 302a of the sheet 302, and also extend in a diagonal direction relative to that of the composite fibers 306a of the sheet 306. Similarly, composite fibers 308a of the sheet 308 extend in a diagonal direction relative to that of the composite fibers 306a of the sheet 306, and also extend in a diagonal direction relative to that of composite fibers 310a of the sheet 310. As can also be seen in FIG. 4, the direction of the diagonal composite fibers 304a of the sheet 304 extend in a direction generally transverse to that of the diagonal composite fibers 308a of the sheet 308. Moreover, the direction of the composite fibers 306a of the sheet 306 extend in a direction generally transverse to that of the composite fibers 302a of the sheet 302, as well as in a direction generally transverse to that of the direction of the composite fibers 310a of the sheet 310. Therefore, the five-layer composite structure 310 provides electrically-conductive signal paths in four different directions.

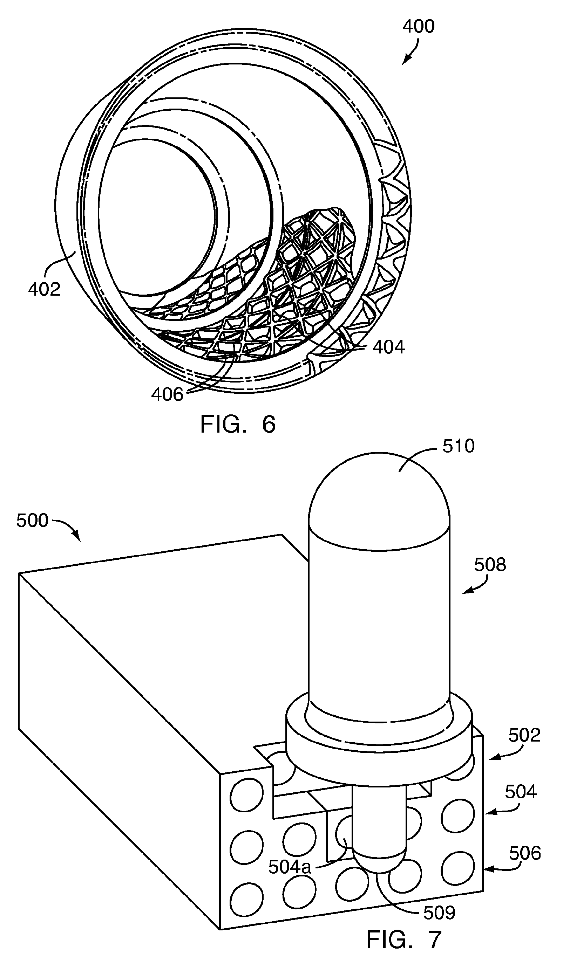

FIG. 6 shows an example of a gas turbine engine component including a plurality of electrically conductive paths built into a composite structure of the component. More specifically, an engine case 400 includes a wall 402 defining a first series of electrically conductive paths 404 formed from electrically conductive composite fibers each generally extending in a first direction parallel to one another, and a second series of electrically conductive paths 406 formed from electrically conductive composite fibers each extending in a second direction parallel to one another such that the first and second series of electrically conductive paths cooperate to form a crisscross pattern.

FIG. 7 illustrates structure configured for coupling an electrically conductive composite fiber to an external component. A composite structure 500 includes, by way of example only, three sheets or layers 502, 504, 506 of composite fibers. A composite fiber 504a disposed in a middle layer 504 of the composite structure 500 is predetermined to form an electrically conductive path. An electrically conductive pin 506 has one end 508 extending into the composite structure 500 and coupled to an end of the electrically conductive path formed from an electrically conductive composite fiber. The pin 506 has another end 510 extending outwardly from the composite structure 500 so as to be exposed in order to electrically couple the electrically conductive path to an external component. The pin 506 can also be configured to be in the form of a nano switch coupled at the end 508 to two or more electrically conductive paths. The nano switch can thus serve to selectively electrically couple such paths to external components. Moreover, the nano switch can be implemented to selectively couple a secondary or tertiary path to an external component should a primary or secondary path fail, and thereby avoid the time and expense of replacing a failed wiring harness.

The primary aspect of this invention is that the embedded electrically conductive composite fibers eliminate wiring harnesses that in many cases can be snagged, torn, or wear against adjacent features. Being embedded within a structure, inherent protection is provided by the structure such that wear and snagging are eliminated. In the event that damage is incurred during operation, loss of signal or electrical carrying capacity can simply be switched to a secondary or tertiary circuit such that completion of a mission can be achieved. Having more than two circuits may be a benefit in that a disrupted circuit can be permanently disabled while the remaining structure still has a capable backup in the tertiary circuit.

Another aspect is added capability becomes inherent to the engine without incurring additional engine weight.

Another aspect is by eliminating external harnesses, space around an engine now becomes available for routing other features or reducing the size of an annulus surrounding the engine in order to maintain airflow or reducing airflow pressure drop along the structure.

Although the composite structure including embedded electrically conductive paths is described herein in the context of a gas turbine engine, it should be understood that such structure can be implemented in any other practical application where wiring harnesses are typically employed.

## Claims

1. A gas turbine engine comprising:
structure having movable portions and static portions; and
at least a portion of the structure including a composite material (100) having an electrically conductive path formed from carbon nanotubes configured for conducting electrical signals therealong,
**characterized in that** a portion of the composite material (100) includes fibers (106a) and a layer of resin (106b) impregnated with a predetermined volume percentage of carbon nanotubes surrounding the fibers and another portion of the composite material includes fibers (102a, 104a, 108a, 110a) and a layer of resin (102b, 104b, 108b, 110b) unfilled with carbon nanotubes surrounding the fibers

2. A gas turbine engine as defined in claim 1, wherein the static portion of the structure includes an engine casing (400) including a composite material having an electrically conductive path (404) formed from carbon nanotubes for conducting electrical signals along the casing (400).

3. A gas turbine engine as defined in claim 1 or 2, wherein the static portion of the structure includes a plurality of struts supporting engine components, at least one of the plurality of struts including a composite material having an electrically conductive path formed from carbon nanotubes for conducting electrical signals therealong.

4. A gas turbine engine as defined in claim 1 to 3, wherein the static portion of the structure includes a composite airframe, at least a portion of the composite airframe including a composite material having an electrically conductive path formed from carbon nanotubes for conducting electrical signals along the composite airframe.

5. A gas turbine engine as defined in claim 1 to 4, wherein the composite material (500) includes a plurality of electrically conductive paths (504a), and further comprising a nano switch coupled to the plurality of electrically conductive paths and configured for selectively electrically coupling the plurality of electrically conductive paths to an external component.

6. A gas turbine engine as defined in claim 1 to 5, further comprising a connector located on a surface of the composite material (500) and coupled to an end of the electrically conductive path for electrically coupling the electrically conductive path to an external component.

7. A gas turbine engine as defined in claim 6, wherein the connector is a pin (506) having one end extending into the composite material (500) and coupled to the end of the electrically conductive path, and another end (510) extending outwardly from the composite material for electrically coupling the electrically conductive path to an external component.

8. A gas turbine engine as defined in claim 1 to 7, wherein the fibers include one of glass fibers, carbon fibers and boron fibers.

9. A gas turbine engine as defined in claim 1 to 8, wherein the composite material is in the form of a sheet.

10. A gas turbine engine as defined in claim 1 to 9, wherein the composite material is in the form of a plurality of sheets in layed-up configuration.

11. A gas turbine engine as defined in claim 10, wherein the plurality of sheets each carry a plurality of composite fibers.

12. A gas turbine engine as defined in claim 1, wherein a plurality of electrically conductive paths extending in a plurality of directions to send electrical signals to various locations of the gas turbine engine.

13. A gas turbine engine as defined in claim 12, wherein the electrically conductive paths are embedded in at least one of the movable portion and the static portion, and each of the electrically conductive paths comprises a layer of resin (106b) impregnated with carbon nanotubes and surrounding a fiber (106a).

14. A gas turbine engine as defined in claim 12 or 13, further comprising a nano switch coupled to one of the electrically conductive paths and configured for selectively electrically coupling the electrically conductive paths of said gas turbine engine to an external component.

## Patentansprüche

1. Gasturbinenmotor, umfassend:
eine Struktur, die bewegliche Teile und statische Teile hat; und wobei mindestens ein Teil der Struktur ein Verbundmaterial (100) einschließt,
das einen aus Kohlenstoff-Nanoröhrchen gebildeten elektrisch leitenden Pfad hat, der so konfiguriert ist, dass er elektrische Signale entlang desselben leitet,
**dadurch gekennzeichnet, dass**
ein Teil des Verbundmaterials (100) Fasern (106a) und eine mit einem vorgegebenen Volumenprozent an Kohlenstoff-Nanoröhrchen imprägnierte Harzschicht (106b) einschließt, die die Fasern umschließt, und ein weiterer Teil des Verbundmaterials Fasern (102a, 104a, 108a, 110a) und
eine nicht mit Kohlenstoff-Nanoröhrchen gefüllte Harzschicht (102b, 104b, 108b, 110b) einschließt, die die Fasern umschließt.

2. Gasturbinenmotor nach Anspruch 1, wobei der statische Teil der Struktur ein Motorgehäuse (400) einschließt, das ein Verbundmaterial einschließt, das einen aus Kohlenstoff-Nanoröhrchen gebildeten elektrisch leitenden Pfad (404) hat, um elektrische Signale entlang des Gehäuses (400) zu leiten.

3. Gasturbinenmotor nach Anspruch 1 oder 2, wobei der statische Teil der Struktur eine Vielzahl von Streben einschließt, die Motorkomponenten tragen, wobei mindestens eine der Vielzahl von Streben ein Verbundmaterial einschließt, das einen aus Kohlenstoff-Nanoröhrchen gebildeten elektrisch leitenden Pfad hat, um elektrische Signale entlang desselben zu leiten.

4. Gasturbinenmotor nach Anspruch 1 bis 3, wobei der statische Teil der Struktur eine Verbundflugzelle einschließt, wobei mindestens ein Teil der Verbundflugzelle ein Verbundmaterial einschließt, das einen aus Kohlenstoff-Nanoröhrchen gebildeten elektrisch leitenden Pfad hat, um elektrische Signale entlang der Verbundflugzelle zu leiten.

5. Gasturbinenmotor nach Anspruch 1 bis 4, wobei das Verbundmaterial (500) eine Vielzahl von elektrisch leitenden Pfaden (504a) einschließt, und ferner einen Nanoschalter umfasst, der mit der Vielzahl von elektrisch leitenden Pfaden gekoppelt und so konfiguriert ist, dass er die Vielzahl von elektrisch leitenden Pfaden selektiv elektrisch mit einer externen Komponente koppelt.

6. Gasturbinenmotor nach Anspruch 1 bis 5, ferner umfassend einen Verbinder, der auf einer Oberfläche des Verbundmaterials (500) angeordnet und mit einem Ende des elektrisch leitenden Pfades gekoppelt ist, um den elektrisch leitenden Pfad elektrisch mit einer externen Komponente zu koppeln.

7. Gasturbinenmotor nach Anspruch 6, wobei der Verbinder ein Stift (506) ist, dessen eines Ende sich in das Verbundmaterial (500) erstreckt und mit dem Ende des elektrisch leitenden Pfades gekoppelt ist, und dessen anderes Ende (510) sich von dem Verbundmaterial nach außen erstreckt, um den elektrisch leitenden Pfad elektrisch mit einer externen Komponente zu koppeln.

8. Gasturbinenmotor nach Anspruch 1 bis 7, wobei die Fasern Glasfasern, Kohlefasern oder Borfasern umfassen.

9. Gasturbinenmotor nach Anspruch 1 bis 8, wobei das Verbundmaterial die Form einer Platte hat.

10. Gasturbinenmotor nach Anspruch 1 bis 9, wobei das Verbundmaterial die Form einer Vielzahl von Platten in übereinander gelegter Konfiguration hat.

11. Gasturbinenmotor nach Anspruch 10, wobei die Vielzahl von Platten jeweils eine Vielzahl von Verbundfasern trägt.

12. Gasturbinenmotor nach Anspruch 1, wobei sich eine Vielzahl von elektrisch leitenden Pfaden in eine Vielzahl von Richtungen erstreckt, um elektrische Signale an verschiedene Stellen des Gasturbinenmotors zu senden.

13. Gasturbinenmotor nach Anspruch 12, wobei die elektrisch leitenden Pfade in mindestens einen Teil aus beweglichem Teil und statischem Teil eingebettet sind, und jeder der elektrisch leitenden Pfade eine Harzschicht (106b) umfasst, die mit Kohlenstoff-Nanoröhrchen imprägniert ist und eine Faser (106a) umschließt.

14. Gasturbinenmotor nach Anspruch 12 oder 13, ferner umfassend einen Nanoschalter, der an einen der elektrisch leitenden Pfade gekoppelt und so konfiguriert ist, dass er die elektrisch leitenden Pfade des Gasturbinenmotors selektiv elektrisch mit einer externen Komponente koppelt.

## Revendications

1. Turbine à gaz comprenant :
une structure munie de parties mobiles et de parties statiques ; et
au moins une partie de la structure comprenant un matériau composite (100) ayant une piste électriquement conductrice formée à partir de nanotubes de carbone configurés pour conduire des signaux électriques le long de celle-ci,
**caractérisée en ce que**
une partie du matériau composite (100) inclut des fibres (106a) et une couche de résine (106b) imprégnée d'un pourcentage en volume prédéterminé de nanotubes de carbone qui entoure les fibres, et une autre partie du matériau composite inclut des fibres (102a, 104a, 108a, 110a) et une couche de résine (102b, 104b, 108b, 110b) non chargée en nanotubes de carbone qui entoure les fibres.

2. Turbine à gaz telle que définie dans la revendication 1, dans laquelle la partie statique de la structure inclut un carter de moteur (400) comprenant un matériau composite ayant une piste électriquement conductrice (404) formée à partir de nanotubes de carbone pour conduire des signaux électriques le long du carter (400).

3. Turbine à gaz telle que définie dans la revendication 1 ou la revendication 2, dans laquelle la partie statique de la structure inclut une pluralité d'entretoises de support des composants du moteur, au moins l'une de la pluralité d'entretoises étant constituée d'un matériau composite ayant une piste électriquement conductrice formée à partir de nanotubes de carbone pour conduire des signaux électriques le long de celle-ci.

4. Turbine à gaz telle que définie dans l'une des revendications 1 à 3, dans laquelle la partie statique de la structure inclut une cellule composite, au moins une partie de la cellule composite ayant une piste électriquement conductrice formée à partir de nanotubes de carbone pour conduire des signaux électriques le long de la cellule composite.

5. Turbine à gaz telle que définie dans l'une des revendications 1 à 4, dans laquelle le matériau composite (500) inclut une pluralité de pistes électriquement conductrices (504a), et comprenant en outre un nano-interrupteur couplé à la pluralité de pistes électriquement conductrices et configuré pour coupler électriquement, de manière sélective, la pluralité de pistes électriquement conductrices avec un composant extérieur.

6. Turbine à gaz telle que définie dans l'une des revendications 1 à 5, comprenant en outre un connecteur placé sur une surface du matériau composite (500) et couplé à une extrémité de la piste électriquement conductrice afin de coupler électriquement la piste électriquement conductrice avec un composant extérieur.

7. Turbine à gaz telle que définie dans la revendication 6, dans laquelle le connecteur est une broche (506) dont une extrémité s'étend dans le matériau composite (500) et est couplée à l'extrémité de la piste électriquement conductrice, et une autre extrémité (510) s'étend vers l'extérieur, à partir du matériau composite, afin de coupler électriquement la piste électriquement conductrice avec un composant extérieur.

8. Turbine à gaz telle que définie dans l'une des revendications 1 à 7, dans laquelle les fibres incluent l'une parmi les fibres de verre, les fibres de carbone et les fibres de bore.

9. Turbine à gaz telle que définie dans l'une des revendications 1 à 8, dans laquelle le matériau composite se trouve sous la forme d'une feuille.

10. Turbine à gaz telle que définie dans l'une des revendications 1 à 9, dans laquelle le matériau composite se trouve sous la forme d'une pluralité de feuilles dans une configuration d'empilement.

11. Turbine à gaz telle que définie dans la revendication 10, dans laquelle chacune de la pluralité de feuilles porte une pluralité de fibres composites.

12. Turbine à gaz telle que définie dans la revendication 1, dans laquelle une pluralité de pistes électriquement conductrices s'étendent dans une pluralité de directions afin d'envoyer des signaux électriques dans différents endroits de la turbine à gaz.

13. Turbine à gaz telle que définie dans la revendication 12, dans laquelle les pistes électriquement conductrices sont encastrées dans au moins l'une des partie mobile et partie statique, et chacune de la pluralité de pistes électriquement conductrices comprend une couche de résine (106b) imprégnée de nanotubes de carbone et entourant une fibre (106a).

14. Turbine à gaz telle que définie dans l'une des revendications 12 ou 13, comprenant en outre un nano-interrupteur couplé à l'une de la pluralité de pistes électriquement conductrices et configuré pour coupler électriquement, de manière sélective, les pistes électriquement conductrices de ladite turbine à gaz avec un composant extérieur.
